# DEMANDE DE BREVET EUROPEEN

(11) **EP 2 340 973 A1**
(43) Date de publication de la demande: **06.07.2011**
(21) Numéro de dépôt: 10306360.8
(22) Date de dépôt: 07.12.2010
(51) Int. Cl.: B60T 11/26, B60T 13/16, B60T 17/06, B60T 17/22

(54) **Réservoir destiné à contenir du liquide de frein pour véhicule automobile et outil de remplissage d'un tel réservoir**

(30) Priorité: 15.12.2009 FR 0958978
(71) Demandeur: Renault s.a.s., 92100 Boulogne-Billancourt (FR)
(72) Inventeur: Gallois, Eric, 78890 GARANCIERES (FR); Persigand, Denis, 78180, MONTIGNY-LE-BRETONNEUX (FR)

(57) **Abrégé**

Réservoir (110) destiné à contenir un liquide (20), comprenant un orifice de remplissage (111) et un conduit (120) de mise à niveau du liquide muni d'une ouverture supérieure (132) positionnée au-dessus d'une ouverture inférieure (131), caractérisé en ce qu'une fois le réservoir mis en place, un plan horizontal passant par le point haut (140) de l'ouverture inférieure (131) du conduit de mise à niveau définit le niveau de remplissage souhaité (133) du réservoir.

## Description

La présente invention concerne un réservoir, en particulier un réservoir pour véhicule automobile et destiné à recevoir du liquide de frein. L'invention concerne également un outil de remplissage d'un tel réservoir.

Il est connu de procéder, en usine, automatiquement au remplissage de différents réservoirs lors de la fabrication de véhicules automobiles. Cependant, un tel remplissage automatique pose des problèmes, notamment des problèmes de niveau de remplissage.

Il peut d'abord y avoir un problème de niveau de remplissage lorsque le réservoir est incliné dans un premier sens et que l'orifice de remplissage est déporté sur un côté du réservoir. Pour remédier à ce problème, le document EP 1 600 348 décrit un réservoir comprenant un orifice de remplissage se prolongeant à l'intérieur du réservoir par un tuyau coudé dirigé sensiblement horizontalement vers l'axe vertical du réservoir. Grâce à un tel réservoir, il est possible de remplir automatiquement le réservoir jusqu'à un niveau de remplissage choisi même si ce réservoir est incliné. Le problème n'est pas résolu si le réservoir est incliné dans un deuxième sens. De plus, la solution présente un sérieux inconvénient : elle complique les remplissages ultérieurs du réservoir lors d'opérations de maintenance, l'écoulement du liquide étant perturbé par la forme coudée du tuyau prévu dans le réservoir. Elle ne permet enfin la mise à niveau que si l'extrémité de l'outil de remplissage vient dans le réservoir plus bas que le niveau désiré : ce qui est contraignant.

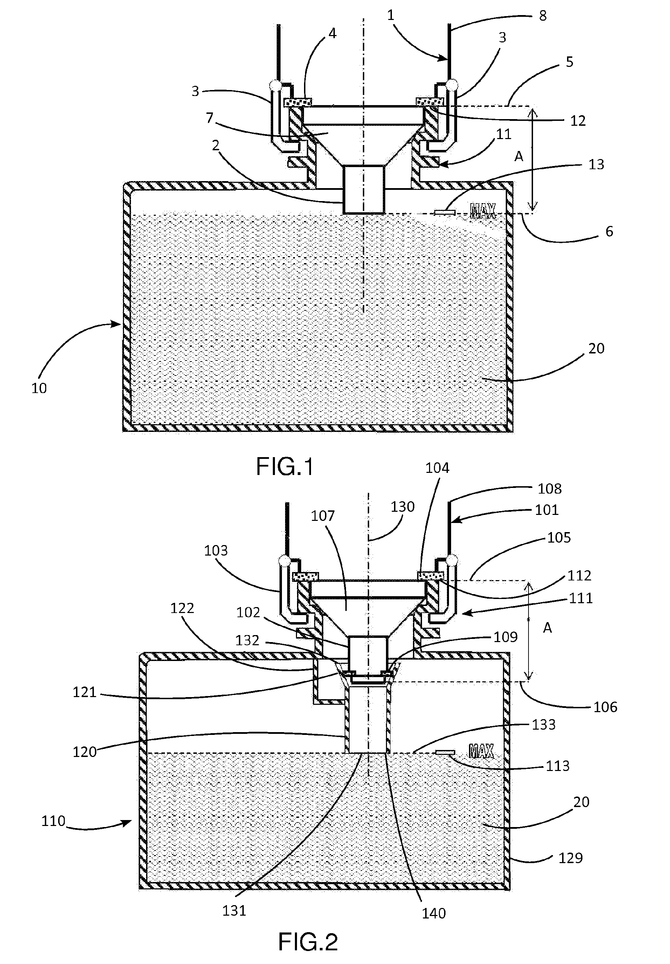

Il y a également un problème de niveau de remplissage lorsque l'on souhaite utiliser un même outil de remplissage automatique pour remplir des réservoirs de types différents. En effet, dans le cas de remplissage automatique, comme représenté à la figure 1, le niveau final 6 de liquide 20 dans le réservoir 10 est déterminé par le point atteint par l'extrémité 2 de l'outil de remplissage automatique 1 dans le réservoir. Par exemple, il correspond au niveau représenté par une marque 13, notamment une marque indiquant un niveau maximum de liquide. Ainsi, si l'on souhaite utiliser le même outil de remplissage automatique pour tous les types de réservoirs, le niveau de liquide atteint en fin de remplissage est, quel que soit le type de réservoir, positionné à distance fixe A de l'orifice du réservoir.

Dans le dispositif représenté à la figure 1, l'orifice de remplissage 11 comprend un plan supérieur 12 sur lequel vient porter, de manière étanche grâce à un joint 4, l'outil de remplissage 1. Des moyens 3 de verrouillage sont prévus pour verrouiller l'outil de remplissage sur le réservoir 10. L'extrémité 2 de l'outil de remplissage présente par exemple une section réduite et est raccordé au reste de l'outil de remplissage par un cône convergent 7. Cette extrémité de l'outil de remplissage détermine le niveau de remplissage du réservoir dans la mesure où, à la fin du procédé de remplissage, l'outil de remplissage aspire le liquide jusqu'à ce que celui-ci atteigne le niveau de cette extrémité.

La distance fixe A constitue une contrainte de réalisation des réservoirs qui doivent par ailleurs répondre à d'autres contraintes comme une contrainte de volume d'air disponible au-dessus du niveau maximum de liquide, une contrainte de volume entre le niveau de liquide minimum et le niveau de liquide maximum, une contrainte de volume et/ou de dimensions disponibles dans le compartiment moteur. Par ailleurs, cette contrainte n'est pas compatible avec les réservoirs de liquide de frein des véhicules équipés d'un système de freinage à pédale découplée.

Ce problème peut être résolu en intégrant un pilotage de la profondeur d'enfoncement d'un tube de mise à niveau de l'outil de remplissage. Mais une telle solution serait très coûteuse.

Le but de la présente invention est de fournir un réservoir et un outil de remplissage remédiant aux inconvénients cités précédemment et permettant d'améliorer les réservoirs et les outils de remplissage connus de l'art antérieur. En particulier, l'invention propose un réservoir simple permettant de définir le niveau de remplissage indépendamment de l'outil de remplissage. L'invention propose également un outil de remplissage simple permettant de coopérer avec un réservoir selon l'invention.

Selon l'invention, le réservoir est destiné à contenir un liquide. Il comprend un orifice de remplissage et un conduit de mise à niveau du liquide muni d'une ouverture supérieure positionnée au-dessus d'une ouverture inférieure. Il est caractérisé en ce qu'une fois le réservoir mis en place, un plan horizontal passant par le point haut de l'ouverture inférieure du conduit de mise à niveau définit le niveau de remplissage souhaité du réservoir.

Le conduit de mise à niveau peut comprendre un premier moyen d'étanchéité destiné à coopérer avec un deuxième moyen d'étanchéité prévu sur un outil de remplissage automatique.

Le réservoir peut comprendre un troisième moyen d'étanchéité destiné à coopérer avec un quatrième moyen d'étanchéité prévu sur un outil de remplissage automatique.

Une fois le réservoir mis en place, le conduit de mise à niveau peut être disposé au moins sensiblement verticalement.

Le conduit de mise à niveau peut être disposé au moins sensiblement dans l'axe de l'orifice de remplissage.

Le conduit de mise à niveau peut comprendre une ouverture inférieure au moins sensiblement horizontale.

Le conduit de mise à niveau peut être dimensionné de sorte à recevoir à l'intérieur de celui-ci une extrémité d'un outil de remplissage.

Le conduit de mise à niveau peut être dimensionné de sorte à recevoir à l'extérieur de celui-ci une extrémité d'un outil de remplissage.

Selon l'invention, l'outil permet le remplissage d'un réservoir défini précédemment. Il est caractérisé en ce qu'il comprend un deuxième moyen d'étanchéité destiné à coopérer avec un premier moyen d'étanchéité prévu sur le conduit de mise à niveau du réservoir.

L'outil de remplissage peut comprendre un quatrième moyen d'étanchéité destiné à coopérer avec un troisième moyen d'étanchéité prévu sur le réservoir.

Le véhicule automobile selon l'invention comprend un réservoir défini précédemment.

Les dessins annexés représentent, à titre d'exemples, deux modes de réalisation d'un réservoir selon l'invention et un mode de réalisation d'un outil de remplissage selon l'invention.
La figure 1 est un schéma en coupe d'un réservoir connu de l'art antérieur, celui-ci étant couplé à un outil de remplissage automatique connu de l'art antérieur.
La figure 2 est un schéma en coupe d'un premier mode de réalisation d'un réservoir selon l'invention, celui-ci étant couplé à un outil de remplissage automatique selon l'invention.
La figure 3 est un schéma en coupe d'un deuxième mode de réalisation d'un réservoir selon l'invention.
La figure 4 est un schéma en coupe du deuxième mode de réalisation d'un réservoir selon l'invention, celui-ci étant couplé à l'outil de remplissage automatique selon l'invention.
La figure 5 est un schéma en coupe d'une première variante de réalisation d'un conduit de mise à niveau.
La figure 6 est un schéma en coupe d'une deuxième variante de réalisation d'un conduit de mise à niveau.

Comme représenté à la figure 2, un premier mode de réalisation d'un réservoir de liquide selon l'invention comprend principalement un corps 129 et un orifice de remplissage 111 prévu en haut du corps. Ce réservoir de liquide est par exemple destiné à contenir un liquide de frein pour alimenter le circuit de freinage d'un véhicule automobile en liquide de frein, via un orifice non représenté. Le réservoir est destiné à être rempli de liquide grâce à un outil de remplissage automatique 101.

Le réservoir comprend également un conduit 120 de mise à niveau du liquide solidaire du reste du réservoir, notamment du corps 129 du réservoir. Tel qu'il est bien visible sur les figures 2 à 4, le corps 129 du réservoir et le conduit 120 de mise à niveau du liquide sont avantageusement fixés immobiles l'un par rapport à l'autre. Le conduit 120 et le reste du réservoir sont par exemple reliés par une liaison mécanique 122, comme une paroi. De préférence, le corps du réservoir, l'orifice de remplissage, le conduit de mise à niveau du liquide et la liaison mécanique sont venus d'une même pièce, par exemple une pièce en matière plastique obtenue par moulage.

De préférence, le conduit de mise à niveau du liquide est au moins sensiblement vertical une fois le réservoir installé sur le véhicule automobile.

De préférence, le conduit de mise à niveau du liquide est au moins sensiblement positionné dans l'axe 130 de l'orifice 111 de remplissage du réservoir.

De préférence encore, le conduit de mise à niveau du liquide présente une ouverture inférieure 131 au moins sensiblement horizontale une fois le réservoir installé sur le véhicule automobile.

Le conduit de mise à niveau peut présenter un premier moyen d'étanchéité 121 destiné à coopérer avec un deuxième moyen d'étanchéité 109 prévu sur l'outil de remplissage automatique, notamment à l'extrémité inférieure 102 de l'outil de remplissage automatique. Le premier moyen d'étanchéité peut consister en une simple portion 121 du tube de mise à niveau. Cette portion peut éventuellement être conique. Le deuxième moyen d'étanchéité peut consister en un joint 109 destiné à venir en contact avec une paroi du tube de mise à niveau. Ainsi, l'extrémité de l'outil de remplissage peut être raccordée de manière étanche au conduit de mise à niveau.

Pour remplir le réservoir en usine, on procède de la façon décrite ci-après.

On fixe l'outil de remplissage automatique 101 au réservoir 110 au niveau de l'orifice de remplissage 111. Une surface, par exemple une surface épaulée, de l'outil de remplissage vient porter sur une face supérieure 112 de l'orifice de remplissage. Au niveau de cette interface, une étanchéité est réalisée grâce à un joint 104. Le joint 104 constitue un premier moyen d'étanchéité et la face supérieure 112 constitue un autre moyen d'étanchéité coopérant avec le premier moyen d'étanchéité. L'outil de remplissage automatique comprend des brides articulées 103 permettant de maintenir l'outil de remplissage automatique dans cette position dans laquelle l'extrémité 102 de l'outil de remplissage automatique pénètre dans le conduit de mise à niveau en formant une étanchéité avec celui-ci grâce aux moyens d'étanchéité décrits précédemment. L'outil de remplissage automatique comprend une conduite 108 reliée au moins par intermittence à un réservoir d'alimentation en liquide de frein. Cette conduite peut être reliée à l'extrémité 102 de l'outil de remplissage automatique par une partie convergente 107, comme un cône.

Éventuellement, une fois l'outil de remplissage automatique fixé au réservoir, on réalise, par aspiration de l'air contenu dans le réservoir grâce à l'outil de remplissage automatique, un vide partiel dans le réservoir.

Puis, on remplit le réservoir de liquide de frein grâce à l'outil de remplissage automatique et via le conduit de mise à niveau. On remplit le réservoir de liquide de frein au-delà du niveau 133 de remplissage désiré par exemple correspondant au niveau de liquide de frein maximum admissible dans le réservoir (et donc au repère MAX 113).

Puis, on aspire le liquide de frein du réservoir grâce à l'outil de remplissage automatique et via le conduit de mise à niveau tant que possible, c'est-à-dire jusqu'à ce que l'air soit aspiré par l'ouverture inférieure 131 du conduit de mise à niveau 120. Dès lors, on ne peut plus aspirer de liquide de frein et le niveau de celui-ci correspond au niveau de remplissage désiré, en particulier, au niveau 133 de liquide de frein maximum admissible dans le réservoir dans le cas représenté à la figure 2.

Enfin, on déverrouille les brides 103 et on retire l'outil de remplissage du réservoir.

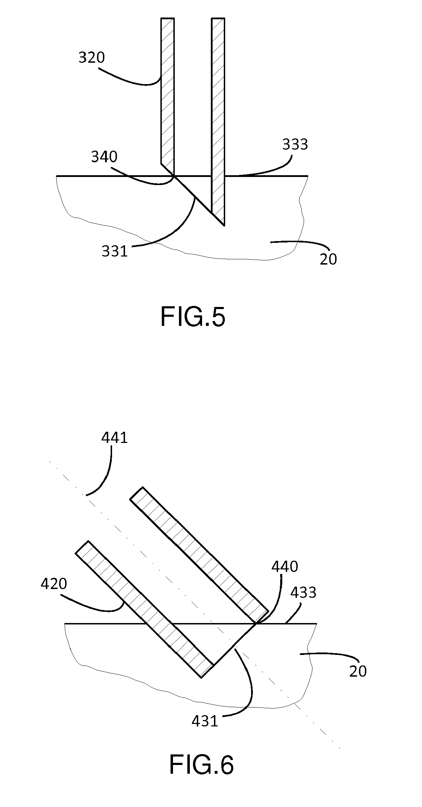

Grâce à une telle procédure et grâce à un tel réservoir, contrairement à ce qui est connu de l'art antérieur, la distance A entre la surface venant porter sur la face supérieure 112 de l'orifice de remplissage et l'ouverture inférieure de l'extrémité 102 de remplissage ne détermine aucunement le niveau de remplissage du réservoir en fin de procédure. Ce n'est que la position de l'ouverture inférieure du conduit de mise à niveau qui détermine ce niveau, en particulier le point le plus haut 140 de l'ouverture inférieure 131. Dans les variantes de réalisation des figures 5 et 6 où les conduits de mise à niveau 320 et 420 présentent respectivement une ouverture inférieure biseautée 331 et un axe longitudinal incliné 441, ce n'est que les positions de ces ouvertures inférieures des conduits de mise à niveau qui déterminent les niveaux, en particulier le point le plus haut 340 de l'ouverture inférieure 331 et le point le plus haut 440 de l'ouverture inférieure 431. Les termes « horizontal », « au-dessus », « en-dessous » et « point haut » font référence au champ de gravitation terrestre lorsque le réservoir est installé ou mis en place.

Ainsi, l'invention porte sur un réservoir destiné à contenir un liquide, comprenant un orifice de remplissage et un conduit de mise à niveau du liquide muni d'une ouverture supérieure positionnée au-dessus d'une ouverture inférieure. Le réservoir est caractérisé en ce que le conduit de mise à niveau est agencé de sorte que l'extrémité inférieure d'un outil de remplissage se raccorde de manière étanche au conduit de mise à niveau, l'ouverture inférieure de l'outil de remplissage demeurant au-dessus du niveau souhaité de remplissage du réservoir.

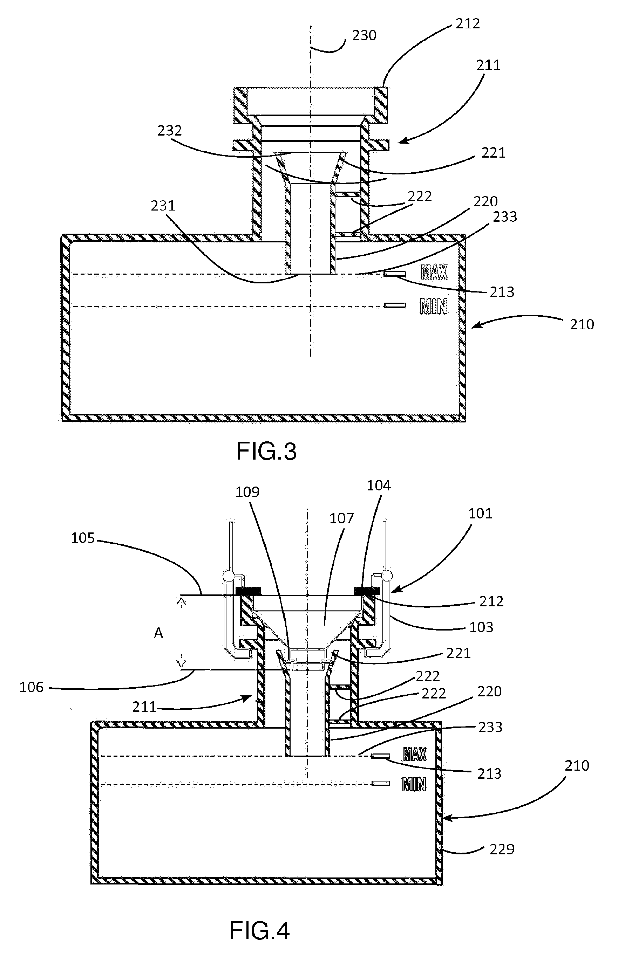

Un deuxième mode de réalisation d'un réservoir de liquide selon l'invention est représenté aux figures 3 et 4. Les éléments constituant ce deuxième mode de réalisation ayant la même fonction que des éléments du premier mode de réalisation ont une référence à laquelle il a été ajouté 100.

Le deuxième mode de réalisation diffère du premier mode de réalisation par sa géométrie, notamment ses formes et volumes. Il présente un orifice de remplissage 211 plus long et un niveau désiré de remplissage 233 se situant plus haut dans le réservoir. En conséquence, le conduit de mise à niveau 220 est positionné plus haut dans le réservoir, par exemple en majeure partie dans l'orifice de remplissage 211. Dans ce mode de réalisation, le conduit de mise à niveau est maintenu dans l'orifice de remplissage par des parois 222.

Alternativement à ce qui a été décrit dans les deux modes de réalisation précédents, lorsque l'outil de remplissage automatique est fixé sur le réservoir, l'extrémité de l'outil de remplissage automatique peut venir se positionner de manière étanche autour du conduit de remplissage, ce dernier s'insérant dans l'extrémité de l'outil de remplissage.

Dans un troisième mode de réalisation non représenté, l'ouverture supérieure du conduit de mise à niveau constitue l'ouverture de l'orifice de remplissage. Ainsi, toute particule introduite dans le réservoir depuis l'extérieur doit passer par l'ouverture inférieure du conduit de mise à niveau pour rejoindre (par exemple) le fond du réservoir.

Précédemment, on a décrit un réservoir selon l'invention appliqué à un système de freinage d'un véhicule automobile. Néanmoins, le réservoir selon l'invention peut être utilisé à d'autres fins dans un véhicule automobile : il peut notamment être utilisé comme réservoir de liquide hydraulique de direction assistée, réservoir de liquide lave-glace ou vase d'expansion de liquide de refroidissement. Plus généralement, le réservoir selon l'invention peut être utilisé à d'autres fins en dehors d'applications automobiles.

Par « au moins sensiblement vertical », on entend « vertical » ou « sensiblement vertical ». Par « au moins sensiblement horizontal », on entend « horizontal » ou « sensiblement horizontal ». Par « au moins sensiblement disposé dans l'axe », on entend « disposé dans l'axe » ou « sensiblement disposé dans l'axe ».

## Revendications

1. Réservoir (110 ; 210) destiné à contenir un liquide (20), comprenant un orifice de remplissage (111 ; 211) et un conduit (120 ; 220 ; 320 ; 420) de mise à niveau du liquide muni d'une ouverture supérieure (132 ;232) positionnée au-dessus d'une ouverture inférieure (131 ; 231 ; 331 ; 431), **caractérisé en ce qu'**une fois le réservoir mis en place, un plan horizontal passant par le point haut (140 ; 240 ; 340 ; 440) de l'ouverture inférieure (131 ; 231 ; 331 ; 431) du conduit de mise à niveau définit le niveau de remplissage souhaité (133 ; 233 ; 333 ; 433) du réservoir.

2. Réservoir selon la revendication 1, **caractérisé en ce que** le conduit de mise à niveau comprend un premier moyen d'étanchéité (121 ; 221) destiné à coopérer avec un deuxième moyen d'étanchéité (109) prévu sur un outil de remplissage automatique.

3. Réservoir selon la revendication 1 ou 2, **caractérisé en ce que** le réservoir comprend un troisième moyen d'étanchéité (112) destiné à coopérer avec un quatrième moyen d'étanchéité (104) prévu sur un outil de remplissage automatique.

4. Réservoir selon l'une des revendications précédentes, **caractérisé en ce qu'**une fois le réservoir mis en place, le conduit de mise à niveau est disposé au moins sensiblement verticalement.

5. Réservoir selon l'une des revendications précédentes, **caractérisé en ce que** le conduit de mise à niveau est disposé au moins sensiblement dans l'axe de l'orifice de remplissage.

6. Réservoir selon l'une des revendications précédentes, **caractérisé en ce que** le conduit de mise à niveau comprend une ouverture inférieure au moins sensiblement horizontale.

7. Réservoir selon l'une des revendications précédentes, **caractérisé en ce que** le conduit de mise à niveau est dimensionné de sorte à recevoir à l'intérieur de celui-ci une extrémité d'un outil de remplissage.

8. Réservoir selon l'une des revendications 1 à 6, **caractérisé en ce que** le conduit de mise à niveau est dimensionné de sorte à recevoir à l'extérieur de celui-ci une extrémité d'un outil de remplissage.

9. Outil de remplissage d'un réservoir selon l'une des revendications précédentes, **caractérisé en ce qu'**il comprend un deuxième moyen d'étanchéité (109) destiné à coopérer avec un premier moyen d'étanchéité (121 ; 221) prévu sur le conduit (120 ; 220 ; 320 ; 420) de mise à niveau du réservoir.

10. Outil de remplissage selon la revendication précédente, **caractérisé en ce qu'**il comprend un quatrième moyen d'étanchéité (104) destiné à coopérer avec un troisième moyen d'étanchéité (112 ; 212) prévu sur le réservoir.

11. Véhicule automobile comprenant un réservoir selon l'une des revendications 1 à 8.
